# EUROPÄISCHE PATENTSCHRIFT

(11) **EP 2 441 739 B1**
(45) Veröffentlichungstag und Bekanntmachung des Hinweises auf die Patenterteilung: **20.07.2016**
(21) Anmeldenummer: 11185636.5
(22) Anmeldetag: 18.10.2011
(51) Int. Cl.: C04B 28/24, C04B 28/26, B01J 20/18, B01J 20/16, C04B 20/10, C01B 39/02, C04B 111/00, C04B 103/65

(54) **Hydrophobierter Zeolith für die Anwendung in Silikatischen Bindemittelsystemen**
Water repellent zeolith for use in silicate binder systems
Zéolithe hydrophobe pour l'application dans des systèmes de liants à base de silicates

(30) Priorität: 18.10.2010 AT 17302010
(43) Veröffentlichungstag der Anmeldung: 18.04.2012
(73) Patentinhaber: Paltentaler Minerals GmbH & Co KG, 8903 Lassing bei Selzthal (AT)
(72) Erfinder: Römer, Andreas, 2620 Hafning (AT)
(74) Vertreter: Burger, Hannes

(56) Entgegenhaltungen:
- EP-A1- 0 063 344
- EP-A2- 2 000 519
- WO-A1-2008/062018
- GB-A- 1 488 341
- JP-A- 8 281 054
- US-A1- 2008 257 218
- BERRY M B ET AL: "Incorporation of zeolites into composite matrices", MICROPOROUS AND MESOPOROUS MATERIALS, ELSEVIER SCIENCE PUBLISHING, NEW YORK, US, Bd. 39, Nr. 1-2, 1. September 2000 (2000-09-01), Seiten 205-217, XP004215026, ISSN: 1387-1811, DOI: 10.1016/S1387-1811(00)00198-0

## Beschreibung

Die Erfindung betrifft einen hydrophobierten natürlichen Zeolith für die Anwendung in silikatischen Bindemittelsystemen entsprechend dem Oberbegriff des Anspruches 1.

Baustoffe auf Basis von Wasserglas, einer Kombination aus Wasserglas und Kieselsol, Kieselsol oder Kieselsäureester gelten als witterungsbeständig und langlebig. Zu diesen silikatischen Baustoffen zählen beispielsweise Silikatfarben und Silikatputze aber auch Grundierungen, Kleber, Armierungsmassen, Fugenmassen oder Betoninstandsetzungsmassen (Mörtel o.ä.). Sie finden im Außen- und Innenbereich von Bauwerken Anwendung. Zum Einsatz gelangt in Baustoffen auf Basis von Wasserglas meist Kaliwasserglas in einer in der Regel 5-bis 32 %igen (w/w) wässrigen Lösung. Fallweise wird jedoch auch Natronwasserglas oder Lithiumwasserglas eingesetzt. In Silikatfarben beträgt der Anteil dieser wässrigen Wasserglaslösung meist zwischen 5 und 25% (w/w), zum Beispiel wird in Silikatputzen meist 5- bis 20% der wässrigen Wasserglaslösung (w/w) eingesetzt. In Baustoffen auf Basis von Kieselsol oder Kieselsäureester werden Kieselsole oder Kieselsäureester meist in einer 20- bis 50 %igen (w/w) wässrigen Lösung, gemessen an ihrem Gehalt an Si02, eingesetzt. Vielfach werden in Baustoffen auch Kombinationen aus Wasserglas und Kieselsol eingesetzt, um die Eigenschaften beider Stoffe miteinander zu kombinieren.

Die Funktion von Wasserglas, Kieselsol oder Kieselsäureester in bauchemischen Zubereitungen liegt darin, dass das im Wasserglas oder im Kieselsol enthaltene Kaliumsilikat K2Si03 oder Natriumsilikat Na2Si03 oder Lithiumsilikat Li2Si03 oder kolloidales amorphe Siliziumdioxid Si02 oder Kieselsäureester mit den Pigmenten der Farben oder einigen Bestandteilen der Putze oder anderen bauchemischen Zubereitungen oder dem Kohlendioxid der Luft chemische Reaktionen eingeht, die zur irreversiblen Bildung von unlöslichen vernetzten Kieselsäuren und Silikaten führt, die als Bindemittel fungieren und nicht ausgewaschen werden. Jene Bestandteile der Pigmente oder Putze, welche diese chemischen Reaktionen eingehen, können Karbonate, oder 2- oder 3-wertigen Kationen sein. Es können sich daher Karbonate der Alkalielemente Lithium, Kalium oder Natrium bilden, die durch die Witterung ausgewaschen werden. Wasserglas, Kieselsol oder Kieselsäureester fungieren in Baustoffen daher als silikatische Bindemittel. Sie werden hier auch als reaktive Silikate bezeichnet. Bauchemische Zubereitungen, welche diese Stoffe enthalten, werden daher als silikatische Bindemittelsysteme bezeichnet. Zeolithe bilden eine große Familie von kristallinen Aluminiumsilikaten, von denen einige wie Phillipsit, Chabazit, Mordenit, Erionit, Heulandit, Klinoptilolith oder Natrolith in der Natur vorkommen, andere wie Linde Typ A Zeolith oder Zeolith ZSM 5 synthetisch hergestellt werden. Eine umfangreiche Darstellung der Eigenschaften von Zeolithen findet sich bei Barrer R.M.: Zeolites and Clay Minerals as Sorbents and Molecular Sieves, Academic Press London, 1978.

Klinoptilolith ist ein natürliches Mineral aus der Kristallgruppe der Zeolithe mit sorptiven und ionentauschenden Eigenschaften, wie in "Reviews in Mineralogy & Geochemistry Volume 45, 2001" hinreichend beschrieben ist. Klinoptilolith kann bis zu 30% seines Gewichtes an Wasser aufnehmen, wobei nicht nur flüssiges Wasser, sondern auch Wasserdampf gebunden werden kann. Ein Großteil dieses Wassers kann in hydratisierter Form an die Kristallstruktur gebunden werden. Eine weitere Besonderheit des Minerals liegt in seiner Fähigkeit zur Aufnahme von gasförmigen geruchsaktiven Stoffen wie Ammoniak, Buttersäure, Dimethylsulfid, Dimethyldisulfid, Kresol, Indol und Skatol. Auch Schadstoffe wie beispielsweise Formaldehyd, Stickstoffmonoxid, Stickstoffdioxid und Schwefeldioxid werden von Klinoptilolith absorbiert. Andere natürliche und synthetische Zeolithe wie Phillipsit, Erionit, Chabazit, Mordenit, Natrolith oder Linde Typ A Zeolith besitzen ähnliche chemische Eigenschaften und sind in ähnlichem Ausmaß zur Aufnahme von Wasser oder gasförmigen Stoffen geeignet. Klinoptilolith und vereinzelt auch andere natürliche Zeolithe wie Phillipsit, Erionit, Chabazit, Mordenit oder Natrolith werden vielfach als Geruchsabsorber, als Absorptionsmittel für gasförmige Schadstoffe und als feuchtigkeitsregulierendes Hilfsmittel eingesetzt. Da Gerüche, gasförmige Schadstoffe und Feuchte einen großen Einfluss auf das atmosphärische Klima eines Raumes ausüben, kann das Vorhandensein von Klinoptilolith und anderen Zeolithen im Raum einen regulierenden Einfluß auf das Raumklima ausüben. Der Raum muss nicht notwendigerweise ein geschlossener Raum sein.

Die Regulierung der atmosphärischen Luftfeuchtigkeit sowie gasförmiger Geruchs- und Schadstoffe werden hier als Klimaregulierung bezeichnet. Es sind typische Eigenschaften von Klinoptilolith und anderen natürlichen Zeolithen in ihren natürlichen Formen. Die natürliche Form von Klinoptilolith und anderen natürlichen Zeolithen wird erhalten, indem das Mineral in Lagerstätten abgebaut, zerkleinert und gegebenenfalls getrocknet wird.

Da Klinoptilolith und andere natürliche Zeolithe als natürliche Minerale nie völlig rein gewonnen werden, sondern immer in Vergesellschaftung mit Begleitmineralien wie Feldspaten, Smektit, Montmorillonit oder Christobalith oder anderen Mineralien vorkommen, werden auch Gesteine mit einem Anteil von über 50% natürlicher Zeolith der Einfachheit halber als natürlicher Zeolith bezeichnet. Da Klinoptilolith sehr oft mit dem chemisch ähnlichen Mineral Heulandit vergesellschaftet ist, werden Gesteine mit einem Anteil von über 50% der Summe von Klinoptilolith und Heulandt in der Literatur wie auch hier ebenfalls der Einfachheit halber als natürlicher Klinoptilolith bezeichnet. Aufgrund der Fähigkeiten von Zeolithen, flüssiges Wasser, Wasserdampf und gasförmige Geruchsstoffe und andere gasförmige Schadstoffe aus der Umgebung aufzunehmen, werden Zeolithe bereits in bestimmten Baustoffen eingesetzt. Die Anmeldung "EP 1 808 420 Baustoff für die Anwendung im Innenbereich von Bauwerken" beschreibt die Verwendung der Zeolithe Natrolithe, Mesolithe und Skolezite als Bestandteile von Putzen, die im Innenbereich von Bauwerken gasförmige Schadstoffe wie flüchtige organische Kohlenwasserstoffe, Formaldehyd oder Stickoxide enthalten. Die Anmeldung beschreibt auch den Einsatz von Hydrophobierungsmittel als Hilfsstoffe, erwähnt aber nicht deren Zweck. Gleichermaßen werden silikatische Zuschläge wie Quarzkörnungen genannt, deren Wirkung und Zusammensetzung aber nicht mit Wasserglas oder Kieselsol oder Kieselsäureester verglichen werden kann, da ihre Oberflächen nicht oder nicht ausreichend hydroxyliert sind. Es ist jedoch noch keine Anwendung bekannt, in der natürliche Zeolithe in Baustoffen auf Basis von Wasserglas, Kieselsol, einer Kombination aus Wasserglas und Kieselsol oder Kieselsäureester eingesetzt werden, wie in den oben aufgezählten silikatischen Baustoffen. Der Grund dafür liegt darin, dass natürliche Zeolithe wegen ihrer Silikatischen Bestandteile und ihrem Anteil an zwei- und dreiwertigen Ionen wie Calcium, Magnesium, Aluminium, Eisen, und Strontium sehr rasch mit wässrigen Lösungen von Wasserglas, Kieselsol oder Kieselsäureester chemisch reagieren, wodurch die Mischungen ihre Verarbeitungsfähigkeit verlieren. Aber auch die Zeolithkomponente verliert ihre besonderen sorptiven Eigenschaften zum Teil oder gänzlich. Der Verlust der Verarbeitungsfähigkeit des Baustoffes kann sich durch Verklumpung der Mischung oder deren Erstarren zu einer festen Masse zeigen.

Insbesondere, wenn als Zeolith einer der natürlichen Zeolithe Klinoptilolith, Mordenit, Chabazit, Phillipsit, Natrolith oder Erionit eingesetzt wird, führt die Kombination mit reaktiven Silikaten, also mit Wasserglas, Kieselsol, einer Kombination aus Wasserglas und Kieselsol oder Kieselsäureester zu rascher Aushärtung der Mischung, sodass sie nicht weiter verarbeitet oder gelagert werden kann, weil die genannten Zeolithe zweiwertige Kationen in austauschbarer Form enthalten, welche in wässriger Lösung rasch mit Wasserglas reagieren, und weil diese Minerale oft bis zu 10% (w/w) Carbonate enthalten.

Tatsächlich kann man einfach beobachten, wie eine Lösung, die reaktive Silikate enthält, innerhalb von wenigen Stunden rasch verklumpt und aushärtet, sobald natürlicher Zeolith in Pulverform eingerührt wird.

Die Herstellung einer verkaufsfähigen Zubereitung in Gebinden, die diese Bestandteile enthält, kann vor der weiteren Verarbeitung nicht gelagert oder transportiert werden.

Werden einer bauchemischen Zubereitung, die neben natürlichen Zeolithen auch Wasserglas, Kieselsol einer Kombination aus Wasserglas und Kieselsol oder Kieselsäureester enthält, nun Hydrophobierungsmittel wie Seifen, Wachse, Paraffine oder Stearate zugesetzt, so wird damit die chemische Reaktion des Zeoliths mit den Silikatischen Bestandteilen der Zubereitung nicht unterdrückt, sondern lediglich die Aufnahme von flüssigem Wasser in der Zubereitung unterdrückt. Auch Silane werden gelegentlich als Hydrophobierungsmittel eingesetzt, wobei sie in flüssiger Lösung nachträglich auf die Oberfläche des bereits verarbeiteten Baustoffes aufgebracht werden und in die Oberflächenporen eindringen. Zu diesem Zeitpunkt können sie keinen Einfluß mehr auf die Verarbeitungsfähigkeit des Baustoffes ausüben. Die Zugabe dieser Hydrophobierungsmittel stellt daher keine geeignete Methode zur Bewahrung der Verarbeitungsfähigkeit der Zeolith enthaltenden Silikatischen Baustoffe und zur Bewahrung der sorptiven Funktion des Zeoliths im Baustoff dar.

Die Kombination der sorptiven Eigenschaften von natürlichen Zeolithen und den Eigenschaften der chemischen Beständigkeit von silikatischen Baustoffen im Innen- und Außenbereich an den Wänden, Decken und Böden von Bauwerken hätte den Vorteil, dass die damit ausgestatteten Bauwerke beständig gegenüber der Einwirkung von flüssigem Wasser und chemisch agressiven Stoffen wie Säuren wären, wie es herkömmliche Silikatische Baustoffe sind, und dass sie gleichzeitig eine hohe Sorptionsfähigkeit gegenüber Wasserdampf, Ammoniak, Geruchsstoffen und anderen gasförmigen Schadstoffen aufweisen würden wie herkömmliche zeolithhältige Baustoffe und die damit das atmosphärische Klima regulieren könnten.

Die EP 0 063 344 A1 beschreibt einen Formkörper aus geblähten Mineralien, die erhalten werden durch Verfestigung eines hydrophobierten geblähten Minerals mit einem mineralischen Bindesystem bestehend entweder aus Calciumaluminat und Aluminiumphosphat oder aus Wasserglas und einem Katalysator, wobei das geblähte Mineral hydrophobiert ist mit einem Organosiloxan. Als Mineralien werden Perlit, Vermiculit, Glimmer und Ton genannt. Die Menge an Organosiloxan beträgt zwischen 0,1 Gew.-% und 5 Gew.-%.

Berry M B et al: "Incorperation of zeolites into composite matrices", Microporous and Mesoporous Materials, Bd. 39, Nr. 1-2, 1. September 2000, Seiten 205-217 beschreibt den Einsatz von synthetischen Zeolithen, die durch Silanisierung hydrophobiert werden, zur Absorption von Stickstoff in dünnen Filmen auf Glasoberflächen zur Herstellung von Sensoren. Als Bindemittel fungiert entweder Tetramethylorthosilikat (TMOS) oder Tetraethylorthosilikat (TE-OS). Das Aushärten des Films wird durch thermische oder UV-Behandlung erzielt.

Aus der US 2008/0257218 A1 sind Additive mit niedriger Dichte für Verbundwerkstoffe bekannt. Die Additive sind zumindest teilweise oder vollständige wasserabweisend, wodurch die Feuchtigkeitsmigration, die Absorption und Retention in einem Verbundmaterial, in dem sie in enthalten sind, verringert wird. Um die Anbindung an eine Matrix zu verbessern sind aktive Zentren auf die Oberfläche der Additive, vorgesehen. Die Verbundmaterialien können im Innen- und Außenbereich verwendet werden.

Die JP 8-281054 A beschreibt den Einsatz hydrophober Zeolithe, die mit alkalischen silikatischen Bindemitteln am Träger fixiert sind, in Formkörpern mit Honigwabenstruktur zur Absorption von Lösungsmitteln.

Aus der GB 1 488 341 A ist ein Verfahren zur Herstellung eines Klinoptiloliths durch Säurebehandlung und Brennen bekannt, wobei man einen natürlich vorkommenden Klinoptilolith mit einer Ammoniumsalzlösung zum Austausch der Kationen gegen Ammoniumionen behandelt, zur Einstellung des angestrebten Verhältnisses SiO₂:Al₂O₃ mit einer Säurelösung in Berührung bringt und brennt. Weiter wird die Verwendung des Klinoptiloliths in Form von mit säurebeständiger Keramikbindung gebundenen Pellets zur Sorption saurer Gase beschrieben.

Die EP 2 000 519 A2 beschreibt die Verwendung von natürlichem Zeolith in silikatischen thermischen Dämmungen oder in Brandschutzanwendungen als Beschichtung oder als Formteil. Um die Wasseraufnahme zu verringern kann das Formteil mit einem Hydrophobierungsmittel in einem Anteil von 0,01 Gew.-% bis 5 Gew.-% versehen sein. Als Hydrophobierungsmittel werden vorzugsweise Organosilikonverbindungen verwendet.

Aufgabe der Erfindung ist es daher, natürlichen Zeolith in eine solche Form zu bringen, dass er in Kontakt mit einem reaktiven Silikat wie Wasserglas, Kieselsol einer Kombination aus Wasserglas und Kieselsol oder Kieselsäureester sowohl die Verarbeitungsfahigkeit und typischen Anwendungseigenschaften der silikatischen Baustoffzubereitung nicht beeinträchtigt, als auch die Sorptionseigenschatten des Zeoliths zur Klimaregulierung erhalten bleiben.

Die Aufgabe wird dadurch gelöst, dass ein hydrophobierter natürlicher Zeolith für die Anwendung in silikatischen Bindemittelsystemen auf Basis von Wasserglas, Kieselsol, einer Kombination aus Wasserglas und Kieselsol oder Kieselsäureester gewählt wird, wobei als hydrophobierter Zeolith ein durch Silanisierung hydrophobierter natürlicher Zeolith dient, der durch Silanisierung hydrophobierte natürliche Zeolith zu mindestens 0,5 % (w/w) und maximal 8 % (w/w) silanisiert ist, sodass nach der Vermischung des hydrophobierten Zeoliths mit Wasserglas, Kieselsol oder Kieselsäureester einerseits seine Absorptionsfähigkeiten für Geruchsstoffe, gasförmige Schadstoffe und Wasserdampf erhalten bleiben, andererseits aber seine Aufnahme von flüssigem Wasser unterbunden wird und die Verarbeitungsfähigkeit und Stabilität des Silikatischen Bindemittelsystems durch die Zugabe des hydrophobierten Zeoliths nicht beeinträchtigt wird.

Dabei kann der durch Silanisierung hydrophobierte natürliche Zeolith beispielsweise durch einfaches Besprühen von Zeolithpulver mit einem handelsüblichen organischen Silanpräparat für bauchemische Zwecke während gleichzeitiger Umwälzung des besprühten Pulvers zum Zwecke der Durchmischung erzeugt werden. Die Umwälzung hat so zu erfolgen, dass die Sprühflüssigkeit einen möglichst großen Teil des Pulvers benetzt und dadurch eine Silanisierung der pulverförmigen Zeolithoberfläche bewirkt. Anstatt des pulverförmigen Zeoliths kann auch gekörnter Zeolith eingesetzt werden.

Es ist von Vorteil, wenn dem Silan Siloxanemulgatoren beigemengt sind, da in diesem Fall die Hydrophobierung gleichmäßig erfolgt und je nach Menge des aufgebrachten Silans ein exakter Hydrophobierungsgrad des Zeoliths eingestellt werden kann. Siloxane besitzen auch die Fähigkeit zur Hydrophobierung und fördern somit auch die Hydrophobierung von Zeolith. Weitere Stoffe, wie sie in handelsüblichen Silanpräparaten oft enthalten sind, beeinträchtigen nicht deren erfindungsgemäßen Einsatz. Beispielsweise werden einige Silanpräparate vor der Anwendung mit Wasser oder anderen Lösungsmitteln verdünnt. Die Menge des eingesetzten Silans beträgt zwischen 0,5 bis 8 % (w/w) der zu behandelnden Zeolithmenge. Vorzugsweise ist eine Silanmenge zwischen 3,5 bis 4 % (w/w) des Zeoliths zu wählen.

Tritt das Silan mit der Zeolithoberfläche in Kontakt, erfolgt die Silanisierung innerhalb weniger Minuten. Die Menge des aufgebrachten Silans und die Umwälzungsdauer des Pulvers ist so zu wählen, dass mindestens 0,8 g. (w/w) des Zeoliths silanisiert werden. Während der Silanisierung entstehen geringe Mengen flüchtiger Alkohole, die im Zuge des Mischungsvorganges gasförmig entweichen. Als organisches Silan eignen sich bevorzugt jene Silane, die bereits in der Bauchemie als Hydrophobierungsmittel eingesetzt werden, wie hochalkylierte Silane. Aber auch andere Silane können erfindungsgemäß verwendet werden. Beispiele für hochalkylierte Silane sind etwa iso-Butyltriethoxysilan oder Octyltriethoxysilane wie Triethoxy(2,4,4-trimethylpentyl)silan.

Die Herstellung von pulverförmigen oder gekörnten natürlichem Zeolith erfolgt üblicherweise durch Zerkleinerung von grob gebrochenem natürlichem Zeolith. Für die erfindungsgemäße Anwendung sind Körnungen der Zeolithpartikel im Bereich von 0 bis 10 mm (Millimeter) geeignet. Die Art der eingesetzten Zerkleinerungswerkzeuge hat keinen Einfluss auf die erfindungsgemäße Anwendung des Zeoliths. Der erfindungsgemäß hydrophobierte natürliche Zeolith kann in allen dünnschichtigen silikatischen Systemen, zu denen auch strukturgebende Beschichtungen zählen, eingesetzt werden, wie beispielsweise Putze, Farben, Fugenmassen, Restaurationsmassen. Über den gesamten Korngrößenbereich von 0 bis 10 mm sind jedoch die Verarbeitungsfähigkeit des erfindungsgefmäß hydrophobierten natürlichen Zeoliths als auch die Aufrechterhaltung seiner natürlichen sorptiven Eigenschaften gegeben.

Es ist wichtig, dass nur Zeolithpulver oder -körnungen eingesetzt werden, welches zu mindestens 0,5 % (w/w) silanisiert ist. In diesem Fall bleibt die Zubereitung während der Lagerung in einem geschlossenen Behältnis mischfähig und kann weiter verarbeitet werden. Die weitere Verarbeitung der Silikatischen Baustoffzubereitung kann entweder das Auftragen auf Flächen als Beschichtung bedeuten, oder aber das Befüllen von Räumen wie Fugen, Hohlräume, Risse, Spalten und dergleichen. Wird ein Zeolith mit einem geringeren Silanisierungsgrad als 0,5 % in silikatische Baustoffsysteme eingebracht, härtet er bereits innerhalb von wenigen Minuten so stark aus, dass er nicht mehr mischfähig ist. Die weitere bestimmungsgemäße Verarbeitung der Baustoffzubereitung wird dadurch verhindert. Überraschenderweise zeigte sich, dass bei einem Silanisierungsgrad des Zeoliths von über 8 % (w/w) die Verarbeitungseigenschaften des Baustoffes und seine Lagerstabilität nicht mehr wesentlich verändern. Allerdings verringern sich dann die sorptiven Eigenschaften des Baustoffes, die dem Zeolith zugeschrieben werden können. Es ist wesentlicher Bestandteil der Erfindung, das Silan nicht dem Zeolith enthaltenden wasserglasbasierten Baustoff zuzusetzen, sondern zuerst den Zeolith zu silanisieren, und erst dann den so präparierten Zeolith dem silikatischen Baustoffsystem, welches entweder Wasserglas oder Kieselsol oder einer Kombination aus Wasserglas und Kieselsol oder Kieselsäureester enthält oder Mischungen davon, zuzusetzen. Andernfalls, so wurde es beobachtet, reagiert bereits der Zeolith mit den anderen Bestandteilen des Baustoffes zu einer kompakten Masse, die nicht weiter verarbeitbar ist. Die erhaltene Mischung des silanisierten Zeoliths mit der Silikatischen Baustoffzubereitung liegt üblicherweise in Pulverform vor, sie kann jedoch auch in Form von Pasten oder Slurries vorliegen, je nach dem Mischungsverhältnis der Komponenten.

Der wesentliche Effekt der Erfindung besteht darin, dass durch die vorgeschlagene hydrophobierende Behandlung des natürlichen Zeoliths seine Einbringung in bauchemische Zubereitungen möglich wird, ohne dass die Verarbeitungsfähigkeit der Zubereitung beeinträchtigt wird und ohne dass die sorptiven Eigenschaften des Zeoliths in der Zubereitung verringert werden. Erfreulicherweise ist diese Behandlung mit verhältnismässig einfachen Maßnahmen wie dem Besprühen und einfachem Mischen von Zeolihtpulvern oder -körnungen mit handelsüblichen bauchemischen Silanisierungspräparaten möglich, wodurch die Behandlung kostengünstig erfolgt und sein wirtschaftlicher Einsatz beträchtlich an Bedeutung gewinnen kann.

Als natürlicher Zeolith kann jeder beliebige natürliche Zeolith genommen werden, vorzugsweise jedoch ein Klinoptilolith, Chabazit, Phillipsit, Natrolith oder Erionit, besonders bevorzugt ein Klinoptilolith genommen werden. Offensichtlich werden durch die Hydrophobierung des Zeoliths chemische Reaktionen zwischen dem Zeolith und den reaktiven silikatischen Bestandteilen wie Wasserglas oder Kieselsol, einer Kombination aus Wasserglas und Kieselsol oder Kieselsäureester der Baustoffzubereitung soweit verringert, dass die beobachteten und genannten Effekte der Verarbeitungsfähigkeit und des Erhalts der Sorptionsfähigkeit des Zeoliths ausreichend erhalten bleiben. Dennoch wird das Aushärten des Baustoffes nach seiner Verarbeitung nicht beeinträchtigt. Diese Effekte sind umso erstaunlicher, als der Fachmann von der Hydrophobierung des natürlichen Zeoliths erwarten würde, dass diese die für die Aufrechterhaltung der Sorptionsfähigkeit erforderlichen Poren im Gefüge des Zeoliths verkleben oder verschlossen werden und damit ihre sorptiven Funktionen nicht mehr wahrnehmen könnte. Überraschenderweise zeigte sich jedoch, dass die Behandlung des Zeoliths mit Silan im Mengenverhältnis zwischen 0,5 und 8 % (w/w) bezogen auf den Zeolith seine Sorptionsfähigkeit im verarbeiteten Silikatischen Baustoff nicht beeinträchtigt. Weiters ist auch überraschend, dass diese modifizierende Behandlung des natürlichen Zeoliths in der Praxis völlig ausreichend ist, um die Verarbeitungsfähigkeit der Silikatischen Baustoffzubereitung zu gewährleisten, und trotzdem das gewünschte Aushärten des Baustoffes nach seiner Verarbeitung nicht zu beeinträchtigen.

Der erfindungsgemäß zusammengesetzte Baustoff ist nach seiner Verarbeitung ausreichend wasserabweisend. Wird er als Beschichtung aufgetragen und härtet aus, nimmt er nur mehr wenig flüssiges Wasser auf. Der Großteil des Wassers perlt von seiner Oberfläche ab und benetzt sie nicht. Allerdings vermag er bis zu 30% (w/w) des enthaltenen hydrophobierten natürlichen Zeoliths an gasförmigen Wasserdampf aufzunehmen und in trockener Umgebungsluft wieder als Wasserdampf abzugeben, wie dies auch nativer, unbehandelter natürlicher Zeolith vermag. Dieser Effekt ist besonders deutlich sichtbar, wenn als natürlicher Zeolith ein Klinoptilolith genommen wird. Steht der hydrophobierten Zeolith enthaltene Silikatische Baustoff in Kontakt mit atmosphärischer Luft, entsteht dadurch ein klimaregulierender Effekt, indem die Luftfeuchtigkeit bei hohem Feuchtegrad der Luft gesenkt und bei niederem Feuchtegrad angehoben wird. Auf diese Weise verringern sich die Schwankungen der Luftfeuchtigkeit bei veränderlicher Wasserdampfbelastung gegenüber einem herkömmlichen Baustoff und es wird ein gleichmäßigeres atmosphärisches Klima erzeugt.

Ein weiterer Effekt der Erfindung besteht darin, dass die Silikatischen Baustoffe durch die Hinzufügung des hydrophobierten natürlichen Zeoliths die zusätzlichen Eigenschaften der Absorption gasförmiger Geruchs- und Schadstoffe, wie sie der native Zeolith besitzt, erhalten. Es werden von diesem in seinen Funktionen aufgewerteten Baustoff gasförmige Substanzen wie Ammoniak, Methylsulfid, Dimethylsulfid, Dimethyldisulfid, flüchtige Fettsäuren, Kresol und andere Geruchsstoffe im gleichen Ausmaß aufgenommen, wie dies die gleiche Menge unbehandelter Zeolith vermag. Klinoptilolith besitzt besonders gute Absorptionsfähikgeiten für gasförmige Stoffe, sodass er besonders geeignet ist. Es hat sich so gezeigt, dass weder die Einbindung des silanisierten Zeoliths in die Silikatische Baustoffmatrix noch die Silanisierung des Zeoliths in einem Ausmaß zwischen 0,5 und 8%(w/w) die Absorptionsfähigkeit für geruchsintensive Stoffe verringern.

Die Erfindung wird im Folgenden anhand von 5 Beispielen näher erläutert.

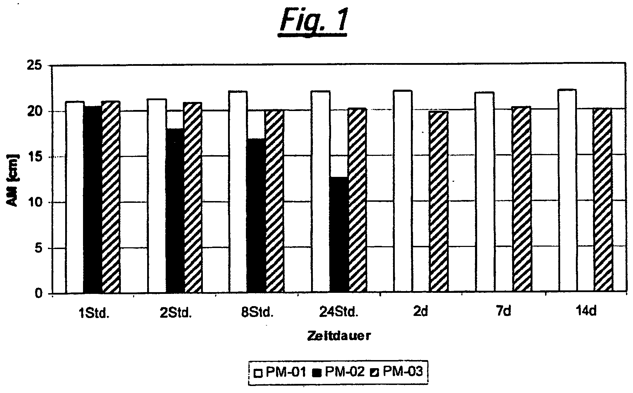

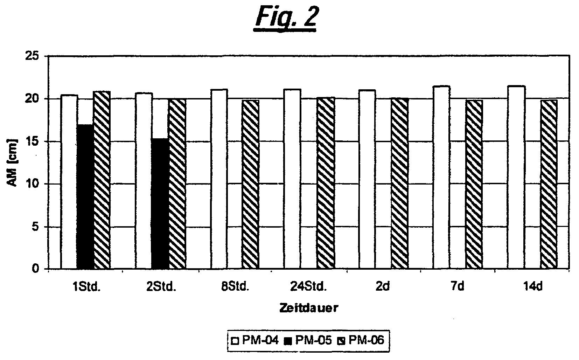

Figur 1 zeigt ein Balkendiagramm mit den Messwerten der Tabelle 2 des Beispiels 2. Figur 2 zeigt ein Balkendiagramm mit den Messwerten der Tabelle 3 des Beispiels 3.

### Beispiel 1:

Eine Probe Klinoptilolithpulver mit Korngrößen zwischen 0 und 50 Mikrometer wird durch Besprühung und gleichzeitiger Durchmischung mit einer Lösung aus Triethoxy(2,4,4-trimethylpentyl)silan und Polydimethylsiloxan zu 3,5% (w/w) silanisiert (Probe 1). Eine andere Probe Klinoptilolithpulver wird nicht mit einem Silan behandelt (Probe 2). Von beiden Proben wird durch Trocknung bei 105°C die Ausgangsfeuchte des Pulvers gemessen. Danach werden beide Proben im Exsikkator nacheinander einer Luftfeuchte von 65%, 95%, 65% ausgesetzt, wobei dazwischen immer die Feuchte des Pulvers durch Trocknung bestimmt wurde. Die Einstellung der Feuchte erfolgte jeweils 24 h lang, der ganze Versuch erfolgte bei 21°C. Die nachfolgende Tabelle listet den Feuchtegrad bzw. den Wassergehalt des Pulvers auf:

**Tabelle 1: Bestimmung der Aufnahmekapazität von Wasserdampf durch unbehandeltes (Probe 2) und durch hydrophobiertes Klinoptilolithpulver (Probe 1).**

| | 1. Feuchte | | 2. Feuchte | | 3. Feuchte | | 4. Feuchte | |
|---|---|---|---|---|---|---|---|---|
| | (%) | MW (%) | (%) | MW (%) | (%) | MW (%) | (%) | MW (%) |
| Probe 1 | 5,3 | 5,4 | 7,1 | 7,2 | 12,8 | 12,8 | 7,4 | 7,3 |
| Probe 1 | 5,4 | | 7,5 | | 12,5 | | 7,3 | |
| Probe 1 | 5,4 | | 7,0 | | 13,2 | | 7,2 | |
| Probe 2 | 5,8 | 5,8 | 7,7 | 7,9 | 14,3 | 14,2 | 7,9 | 8,0 |
| Probe 2 | 5,9 | | 7,8 | | 14,4 | | 7,4 | |
| Probe 2 | 5,7 | | 8,2 | | 13,9 | | 8,5 | |

Tabellenerklärung: 1. Feuchte: Ausgangsfeuchte zur totalen Feuchte (Sättigung) 0%, 2. Feuchte: Ausgleichsfeuchte (Gleichgewichtsfeuchte) bei 65% Luftfeuchte, 3. Feuchte: maximale Feuchte bei >95% Luftfeuchte, 4. Feuchte: Zurücktrocken bei Luftfeuchte 65% auf Ausgleichsfeuchte (Gleichgewichtsfeuchte), MW: Mittelwert

Das Ergebnis des Beispiel 1 zeigt deutlich, dass der silanisierte Klinoptilolith (Probe 1) ähnlich wie der unbehandelte, native Klinoptilolith (Probe 2) Wasserdampf aus der Luft aufnimmt und wieder abgibt in Abhängigkeit vom Feuchtegrad der Luft. Auf diese Weise entsteht ein klimaregulierender Effekt.

### Beispiel 2:

Klinoptilolithpulver in der Körnung 0 bis 50 Mikrometer wurde durch Besprühen mit einer Lösung von 75% Octyltriethoxysilan und 20% Polydimethylsilan im Verhältnis 4 % (w/w) bezogen auf Klinoptilolith während des Mischvorganges bessprüht und so ein durch Silanisierung hydrophobierter Klinoptilolith hergestellt. Der hydrophobierte Klinoptilolith wurde einem Silikatputz auf Basis von Kaliwasserglas beigemengt, sodass die fertige Mischung folgende Bestandteile aufwies (Anteile in %w/w): Wasser: 5,88; organisches Bindemittel 50%ige Styrolacetatlösung: 9,5; 28%ige Kaliwasserglaslösung: 6; Kalziumkarbonat in der Körnung 0-50 Mikrometer: 29; Kalziumkarbonat in der Körnung 1-1,5 mm: 19,50; Kalziumkarbonat in der Körnung 1,5-2,0 mm: 19,50; Titandioxid: 1,5; Mineralentschäumer: 0,5; Additive: 1,7; Zuschlagstoffe (Fasern): 0,45. In einer Probe wurde noch hydrophobierter Klinoptilolith (7%) zugemischt, in einer zweiten Probe wurde stattdessen noch nativer (nicht hydrophobierter) Klinoptilolith zugemischt, in einer weiteren Probe wurden stattdessen noch weitere 7% Kalziumkarbonat in der Körnung 0-50 Mikrometer zugemischt.

Als Maß für die Verarbeitungsfähigkeit wurde das Ausbreitmaß (AM) nach der europäischen Norm DIN EN 1060 Teil 3 in cm nach verschiedenen Zeitpunkten bestimmt. Die so untersuchten Proben waren PM-01 (Silikatputz ohne Klinoptilolith); PM-02: (Silikatputz mit nativem Klinoptilolith); PM-03 (Silikatputz mit erfindungsgemäß hydrophobiertem Klinoptilolith). Es wurden Dreifachbestimmungen durchgeführt.

Die Ergebnisse sind in Tabelle 2 sowie in Figur 1 dargestellt:

**Tabelle 2: Bestimmung des Ausbreitmaßes (AM) nach DIN EN 1060 Teil 3 in cm von Silikatputz ohne Klinoptilolith (PM-01), von Silikatputz mit unhydrophobiertem Klinoptilolith (PM-02), von Silikatputz mit hydrophobiertem Klinoptilolith (PM-03}.**

| Rezeptur-Nr.: | Zeitdauer | | | | | | |
|---|---|---|---|---|---|---|---|
| | 1Std. | 2Std. | 8Std. | 24Std. | 2d | 7d | 14d |
| PM-01 | 21 | 21,3 | 22 | 22,1 | 22 | 21,8 | 22,1 |
| PM-02 | 20,5 | 18 | 16,8 | 12,6 | n.m. | n.m. | n.m. |
| PM-03 | 21 | 20,8 | 20 | 20,1 | 19,8 | 20,2 | 20 |

| | | | | | | | |
|---|---|---|---|---|---|---|---|
| n.m. = nicht messbar / ausgehärtet * Dreifachbestimmung | | | | | | | |

Die Ergebnisse zeigen im Vergleich zwischen PM-01 und PM-03, dass der hydrophobierte Klinoptilolith im auf Kaliwasserglas basierenden Silikatputz (PM-03) die Verarbeitungsfähigkeit des Silikatputzes nicht beeinträchtigt, während der Wasserglas-Silikatputz mit nativem Klinoptilolith (PM-02) nach 8 Stunden nicht mehr verarbeitungsfähig ist.

### Beispiel. 3:

Klinoptilolithpulver in der Körnung 0 bis 50 Mikrometer wurde durch Besprühen mit einer Lösung von 75% Octyltriethoxysilan und 20% Polydimethylsilan im Verhältnis 4 % (w/w) bezogen auf Klinoptilolith während des Mischvorganges besprüht und so ein durch Silanisierung hydrophobierter Klinoptilolith hergestellt. Der hydrophobierte Klinoptilolith wurde einem Silikatputz auf Basis von Kieselsol eigemengt, sodass die fertige Mischung folgende Bestandteile aufwies (Anteile in %w/w): Wasser: 5,63; organische Bindemittel 50%ige Styrolacetatlösung: 9,5; 30%ige Kieselsollösung Klebsol 30V 12: 6; Kalziumkarbonat in der Körnung 0-50 Mikrometer: 29; Kalziumkarbonat in der Körnung 1-1,5 mm: 19,50; Kalziumkarbonat in der Körnung 1,5-2,0 mm: 19,50; Titandioxid: 1,5; Mineralentschäumer: 0,5; Additive: 1,7; Zuschlagstoffe (Fasern): 0,45,. In einer Probe wurde noch hydrophobierter Klinoptilolith (7%) zugemischt, in einer zweiten Probe wurde stattdessen noch nativer (nicht hydrophobierter) Klinoptilolith zugemischt, in einer weiteren Probe wurden stattdessen noch weitere 7% Kalziumkarbonat in der Körnung 0-50 Mikrometer zugemischt.

Als Maß für die Verarbeitungsfähigkeit wurde das Ausbreitmaß (AM) nach der europäischen Norm DIN EN 1060 Teil 3 in cm nach verschiedenen Zeitpunkten bestimmt. Die so untersuchten Proben waren PM-04 (Silikatputz ohne Klinoptilolith); PM-05: (Silikatputz mit nativem Klinoptilolith); PM-06 (Silikatputz mit erfindungsgemäß hydrophobiertem Klinoptilolith). Es wurden Dreifachbestimmungen durchgeführt.

Die Ergebnisse sind in Tabelle 3 sowie in Figur 2 dargestellt:

**Tabelle 3: Bestimmung-des Ausbreitmaßes (AM) nach DIN EN 1060 Teil 3 in cm von Silikatputz ohne Klinoptilolith (PM-04), von Silikatputz mit unhydrophobiertem Klinoptilolith (PM-05), und von Silikatputz mit hydrophobiertem Klinoptilolith (PM-06).**

| Rezeptur-Nr.: | Zeit | | | | | | |
|---|---|---|---|---|---|---|---|
| | 1Std. | 2Std. | 8Std. | 24Std. | 2d | 7d | 14d |
| PM-04 | 20,5 | 20,7 | 21,1 | 21,1 | 21 | 21,5 | 21,5 |
| PM-05 | 17 | 15,3 | n.m. | n.m. | n.m. | n.m. | n.m. |
| PM-06 | 20,9 | 20 | 19,8 | 20,2 | 20 | 19,8 | 19,8 |

| | | | | | | | |
|---|---|---|---|---|---|---|---|
| n.m. = nicht messbar / ausgehärtet * Dreifachbestimmung | | | | | | | |

Die Ergebnisse zeigen im Vergleich zwischen PM-04 und PM-06, dass der hydrophobierte Klinoptilolith im auf Kieselsol basierenden Silikatputz (PM-06) die Verarbeitungsfähigkeit des Silikatputzes nicht beeinträchtigt, während der Kieselsol-Silikatputz mit nativem Klinoptilolith (PM-05) nach 8 Stunden nicht mehr verarbeitungsfähig ist.

### Beispiel 4:

Eine Probe Klinoptilolithpulver mit Korngrößen zwischen 0 und 50 Mikrometer wird durch Besprühung und gleichzeitiger Durchmischung mit einer Lösung aus Triethoxy(2,4,4-trimethylpentyl)silan und Polydimethylsiloxan zu 3,5% (w/w) silanisiert (Probe 1). Eine andere Probe Klinoptilolithpulver wird nicht mit einem Silan behandelt (Probe 2). Jede Probe wird für sich in einer Menge von ca. 10 g in ein Becherglas gegeben, das zu ca. 75% mit Leitungswasser gefüllt ist, also mit ca. 150 ml und mit einem Magnetrührer gerührt wird. Nun wird beurteilt, wie lange es dauert, bis das Wasser die Oberfläche des Klinoptilolithpulvers vollständig benetzt und im Wasser zu Boden sinkt.

Probe 2 benötigt ca. 0,5 Sekunden, bis die vollständige Benetzung erfolgt ist und das Klinoptilolithpulver zu Boden sinkt.

Probe 1 wird während der Beobachtungszeit von 2 Tagen überhaupt nicht mit Wasser benetzt und sinkt daher in dieser Zeit nicht zu Boden.

Dieses Beispiel zeigt deutlich, dass die Hydrophobierung des Zeoliths eine Aufnahme von flüssigem Wasser unterbindet.

### Beispiel 5:

Die Mischungen aus Beispiel 2 wurden nach der Aushärtung gemahlen und als Pulver < 1mm Korngrösse in der Schichtdicke von 1 mm jeweils in einem luftdicht verschlossenem 2-Liter Glasgefäß auf den pastösen Gärinhalt einer Biogasanlage gestreut. Der Gärinhalt wurde zu etwa 1-2 mm Dicke in die Glasgefäße gefüllt und stammt aus der Vergärung von Schlachtabfällen. Er war sehr geruchsintensiv. Nun wurde in das Gefäß ein Supelco portable field sampler # 504831 gehalten, damit Geruchsstoffe bis zum auf der Faser des Probenahmesystems absorbiert werden. Nach 25-stündiger Konditionierung wurden die Field sampler mittels Headspace-GC-MS analysiert und identifiziert und daraus die Geruchsstoffkonzentration im Glasgefäß ermittelt. Diese Analysenmethode ist als Festphasen Mikroextraktion bekannt und bei J.Pawliszin, Solid Phase Microextraction, Theory and Practice, Wiley VCH 1997, ausführlich beschrieben.

Tabelle 4 zeigt die Ergebnisse der Abnahmen verschiedener geruchsaktiver Substanzen nach 25 Stunden Inkubation in der Luftatmosphäre der Glasgefäße:

**Tabelle 4: Abnahmen geruchsaktiver Substanzen nach 25 Stunden in der Gasatmosphäre von Inkubationsgläsern mit Gärinhalt und jeweils eine der Proben PM-01, PM-02 bzw. PM-03 in Prozent der Konzentrationen des Zeitpunktes 0 Stunden:**

| Verbindung | PM-01 | PM-02 | PM-03 |
|---|---|---|---|
| Dirnethylsulfid | 82 | 91 | 55 |
| Dimethyldisulfid | 76 | 82 | 24 |
| Kresol | 92 | 94 | 49 |
| Indol | 80 | 73 | 38 |
| Skatol | 69 | 88 | 17 |

Das Ergebnis des Experiments zeigt deutlich, dass in allen Gefäßen eine Abnahme ausgewählter Geruchsstoffe nach 25 h festgestellt werden konnte. In dem Gefäß, in dem die Mischung mit dem hydrophobierten Zeolith eingesetzt wurde (PM-03), konnte jedoch eine signifikante Konzentrationsabnahme aller gemessenen Geruchsstoffe gegenüber den zwei anderen Gefäßen (PM-01 und PM-02) beobachtet werden, welche die intakte sorptive Wirkung des Zeoliths im silikatischen Bindemittelsystem belegt. Die Proben PM-01 und PM-02 zeigen hingegen keinen signifikanten Unterschied voneinander.

## Patentansprüche

1. Anwendung von hydrophobiertem natürlichem Zeolith in einer silikatischen, als Beschichtung auf Flächen aufzutragende oder in Fugen, Risse, Spalten zu füllende Baustoffzubereitung mit einem silikatischen Bindemittelsystem auf Basis von Wasserglas oder Kieselsol oder einer Kombination aus Wasserglas und Kieselsol oder Kieselsäureester, **dadurch gekennzeichnet, dass** als hydrophobierter Zeolith ein durch Silanisierung hydrophobierter natürlicher Zeolith dient, wobei der durch Silanisierung hydrophobierte natürliche Zeolith zu mindestens 0,5 % (w/w) und maximal 8 % (w/w) silanisiert ist sodass nach der Vermischung des hydrophobierten Zeoliths mit Wasserglas, Kieselsol oder Kieselsäureester einerseits seine Absorptionsfähigkeiten für Geruchsstoffe, gasförmige Schadstoffe und Wasserdampf erhalten bleiben, andererseits aber seine Aufnahme von flüssigem Wasser unterbunden wird und die Verarbeitungsfähigkeit und Stabilität des Silikatischen Bindemittelsystems durch die Zugabe des hydrophobierten Zeoliths nicht beeinträchtigt wird.

2. Anwendung nach Anspruch 1, **dadurch gekennzeichnet, dass** als natürlicher Zeolith ein Klinoptilolith genommen wird.

3. Anwendung nach den Ansprüchen 1 und 2, **dadurch gekennzeichnet, dass** der durch Silanisierung hydrophobierte natürliche Zeolith zu mindestens 3,5 % (w/w) und maximal 4 % (w/w) silanisiert ist.

4. Anwendung nach den Ansprüchen 1, 2, und 3, **dadurch gekennzeichnet, dass** als Silanisierungsmittel ein Octyltriethoxysilan oder ein Aminopropylsilan verwendet wird.

5. Anwendung nach den Ansprüchen 1, 2, 3 und 4, **dadurch gekennzeichnet, dass** dem Silanisierungsmittel ein Siloxan, vorzugsweise Polydimethylsiloxan, zugesetzt wird.

## Claims

1. A use of water repellent natural zeolith in a silicate building material preparation to be applied as coating on surfaces or to be filled in interstices, cracks, gaps, with a silicate binder system on the basis of water glass or silica sol or of a combination of water glass and silica sol or silicic acid ester, **characterized in that** a natural zeolith, made water repellent by silanization, serves as water repellent zeolith, wherein the natural zeolith, made water repellent by silanization, is silanized to at least 0.5% (w/w) and as a maximum 8% (w/w), so that after the mixing of the water repellent zeolith with water glass, silica sol or silicic acid ester on the one hand its absorptive capacities for odorous substances, gaseous noxious substances and water vapour are preserved, but on the other hand its uptake of liquid water is prevented and the workability and stability of the silicate binder system is not impaired by the addition of the water repellent zeolith.

2. The use according to claim 1, **characterized in that** a clinoptilolith is taken as natural zeolith.

3. The use according to claims 1 and 2, **characterized in that** the natural zeolith, made water repellent by silanization, is silanized to at least 3.5% (w/w) and as a maximum 4% (w/w).

4. The use according to claims 1, 2 and 3, **characterized in that** an octyltriethoxysilane or an aminopropylsilane is used as silanization means.

5. The use according to claims 1, 2, 3 and 4, **characterized in that** a siloxane, preferably polydimethylsiloxane, is added to the silanization means.

## Revendications

1. Application de zéolithe naturelle rendue hydrophobe, dans une préparation siliceuse de matériaux de construction destinée à être appliquée comme revêtement sur des surfaces ou à être introduite dans des joints, fissures, fentes, avec un système de liants siliceux à base de verre liquide ou de sol de silice ou d'une combinaison de verre liquide et sol de silice ou d'un ester d'acide silicique, **caractérisé en ce que** sert comme zéolithe rendue hydrophobe une zéolithe naturelle rendue hydrophobe par silanisation, la zéolithe naturelle rendue hydrophobe par silanisation étant silanisée à au moins 0,5 % (w/w) et au maximum 8 % (w/w), si bien que, après mélange de la zéolithe rendue hydrophobe avec du verre liquide, du sol de silice ou d'un ester d'acide silicique, ses capacités d'absorption de substances odorantes, de substances nuisibles sous forme de gaz et de la vapeur d'eau restent inchangées, d'un côté, et qu'il est empêché d'absorber de l'eau liquide et que la capacité d'être travaillé et la stabilité du système siliceux de liants ne sont pas dégradées par l'adjonction de la zéolithe rendue hydrophobe.

2. Application selon la revendication 1, **caractérisé en ce qu'**il est pris comme zéolithe naturelle une clinoptilolite.

3. Application selon les revendications 1 et 2, **caractérisé en ce que** la zéolithe naturelle rendue hydrophobe par silanisation est silanisée à au moins 3,5 % (w/w) et au maximum à 4 % (w/w).

4. Application selon les revendications 1, 2 et 3, **caractérisé en ce qu'**est utilisée comme substance de silanisation un octyltriéthoxysilane ou un aminopropylsilane.

5. Application selon les revendications 1, 2, 3 et 4, **caractérisé en ce qu'**il est ajouté à la substance de silanisation, un siloxane, de préférence un polydiméthylsiloxane.
